# EUROPÄISCHE PATENTANMELDUNG

(11) **EP 0 550 032 A2**
(43) Veröffentlichungstag der Anmeldung: **07.07.1993**
(21) Anmeldenummer: 92121987.9
(22) Anmeldetag: 24.12.1992
(51) Int. Cl.: C08L 59/00, C08K 3/22

(54) **Laserbeschriftbare Kunststoff-Formmasse, Verfahren zu ihrer Herstellung und Verwendung**

(30) Priorität: 31.12.1991 DE 4143258
(71) Anmelder: HOECHST AKTIENGESELLSCHAFT, D-65926 Frankfurt am Main (DE)
(72) Erfinder: Haack, Ulrich, W-6146 Alsbach (DE); Hess, Gerhard, W-6238 Hofheim/Ts. (DE); Kurz, Klaus, Dr., W-6238 Hofheim/Ts. (DE); Witan, Kurt, Dr., W-6238 Hofheim/Ts. (DE)

(57) **Zusammenfassung**

Eine laserbeschriftbare Kunststoff-Formmasse besteht aus einem organischen Polymer, vorzugsweise einem Polyacetal, einem anorganischen, photoaktiven Weißpigment und gegebenenfalls einem weiteren Zusatzstoff. Daraus hergestellte Formteile werden durch Bestrahlung mit einem Excimer-Laser mit einer abriebfesten und dauerhaften dunklen Beschriftung, vorzugsweise einer Schwarzfärbung versehen.

## Beschreibung

Die Erfindung betrifft eine Kunststoff-Formmasse, die aus einem Polyacetal-Werkstoff und mindestens einem Weißpigment besteht, ein Verfahren zur Herstellung der beschrifteten Formmasse, sowie die Verwendung einer solchen Kunststoff-Formmasse als Ausgangsmaterial für die Herstellung von geformten Gegenständen, die mit Hilfe von EXCIMER-LASER-Strahlung mit Zeichen versehen werden können.

Es ist bekannt, daß Teile aus Kunststoff mit Zeichen versehen werden, wenn der Kunststoff einen Füllstoff enthält, der sich bei Einwirkung von Energiestrahlung auf die Oberfläche der Teile verfärbt (DE-C 29 36 926). Als Kunststoffmaterial dient Polyacetal, dem als Füllstoff Ruß oder Graphit zugesetzt wird, vorzugsweise in einer Konzentration von 0,08 bis 0,125 Prozent. Dem Pigment kann noch ein optischer Aufheller beigemischt sein, der durch die LASER-Wirkung nicht zerstört wird (DE-C 30 44 722). Die Kontrastwirkung wird durch eine schaumartige Schmelzzone auf schwarzem Untergrund erzielt. Als Energiestrahlung wird in beiden Veröffentlichungen ein ablenkbarer, fokussierbarer Energiestrahl, vorzugsweise ein Laser-Strahl, genannt, eine nähere Spezifizierung wird nicht gegeben.

Ferner ist ein Verfahren zur Beschriftung von hochmolekularem Material bekannt, das mindestens einen strahlungsempfindlichen, eine Verfärbung verursachenden Zusatzstoff enthält, wobei man als Energiestrahlung LASER-Licht, z.B. Festkörper-Puls-LASER, mit Puls modifizierte Dauerstrich-LASER, Metalldampf-LASER und Halbleiter-LASER, und als Zusatzstoff mindestens ein anorganisches und/oder organisches Pigment und/oder einen polymerlöslichen Farbstoff verwendet (EP-A 0 190 997). Excimer-Laser werden jedoch nicht verwendet.

Ebenfalls bekannt ist ein Verfahren zur LASER-Beschriftung von hochmolekularem organischen Material, das mindestens einen strahlungsempfindlichen ausbleichbaren Zusatzstoff und mindestens eine weniger strahlungsempfindliche nicht ausbleichende Verbindung enthält. Als gepulste LASER-Lichtquelle wird hier neben einem Excimer-Laser insbesondere ein frequenzverdoppelter Nd:YAG-LASER (Wellenlänge 532 nm) verwendet (EP-A 0 327 508). Es werden hiermit jedoch nur helle oder farbige Schriftzeichen erhalten.

Aufgabe der Erfindung ist die Bereitstellung einer pigmenthaltigen Kunststoff-Formmasse, vorzugsweise einer Polyacetal-Formmasse, die die genannten Nachteile nicht aufweist.

Die Erfindung betrifft laserbeschriftbare Kunststoff-Formmassen, bestehend aus mindestens einem organischen Polymer und mindestens einem Pigment, dadurch gekennzeichnet, daß (a) das Polymer ein Polyacetal ist, (b) das Pigment ein anorganisches photoaktives Weißpigment ist und (c) die Formmasse gegebenenfalls mindestens einen weiteren Zusatzstoff enthält.

Die Erfindung betrifft ferner ein Verfahren, mit dem eine Kunststoff-Formmasse a), bevorzugt ein Polyacetal-Polymer als Polymerkomponente, die b) ein photoaktives Weißpigment und gegebenenfalls c) einen weiteren Zusatzstoff enthält, mit einem Excimer-Laser bei Wellenlängen von 200 bis 550 nm, vorzugsweise 240 bis 360 und insbesondere 248 bis 351 bestrahlt wird. Die Kunststoff-Formmasse wird als thermoplastisches Material zur Herstellung von geformten Gegenständen, die mit Hilfe einer Excimer-Laser-Strahlung mit Zeichen versehen werden können, verwendet.

Die Kunststoff-Formmasse wird durch die Excimer-Laser-Bestrahlung mit einer dunklen Beschriftung bzw. dunkelfarbigen Zeichen, vorzugsweise einer Schwarzfärbung versehen, wobei eine Aufrauhung oder eine Aufschäumung an der Auftreffstelle des Laserstrahles vermieden wird. Hierdurch wird eine dauerhafte und abriebfeste Kennzeichnung von Formteilen möglich.

Um eine möglichst abriebfeste und schwarze Beschriftung auf hellem Untergrund zu erzielen, ist als photoaktives Weißpigment beispielsweise Titandioxid geeignet. Weiterhin ist die Verwendung eines EXCIMER-LASERS erforderlich, da mit dessen Wellenlängen (d.h. den entsprechenden Photonen-Energien) eine Schwarzfärbung photoaktiver Weißpigmente erreicht werden kann. Damit keine Beeinflussung der Oberfläche durch die Wechselwirkung des LASER-Strahles mit der Kunststoff-Formmasse stattfindet, muß die Absorption der EXCIMER-LASER-Strahlung nahezu null oder sehr klein sein, weshalb insbesondere Polyacetale geeignete Kunststoffe sind. Durch diese Art der Kennzeichnung ist daher gewährleistet, daß alle wichtigen anwendungstechnischen Werkstoffeigenschaften auch nach der Beschriftung vollständig erhalten bleiben. Weiterhin ist die Auflösung der Zeichen besser als bei Verwendung von CO₂ - oder Nd:YAG-LASER, so daß auch sehr kleine Beschriftungen noch gut zu erkennen sind. Mit dem erfindungsgemäß angegebenen Verfahren ist ebenfalls eine sehr klare Kennzeichnung möglich, da durch das Fehlen thermischer Einflüsse bei der Beschriftung ein Ausfransen der Randzonen der Schriftzeichen nicht auftritt. Das Fehlen thermischer Effekte bei dem angegebenen Verfahren erlaubt darüberhinaus ein dimensions- und verzugsfreies Beschriften, beispielsweise an sehr dünnen Formteilen.

Als Basispolymere a) werden im allgemeinen die bekannten Polyoxymethylene eingesetzt, wie sie beispielsweise in der DE-A 29 47 490 beschrieben sind. Es handelt sich hierbei um unverzweigte lineare Polymere, die in der Regel mindestens 80 %, vorzugsweise mindestens 90 Gew.-% Oxymethyleneinheiten (-CH₂O-) enthalten. Der Begriff Polyoxymethylene umfaßt dabei sowohl Homopolymere des Formaldehyds oder seiner cyclischen Oligomeren wie Trioxan oder Tetroxan als auch entsprechende Copolymere.

Homopolymere des Formaldehyds oder Trioxans sind dabei solche Polymere, deren Hydroxylendgruppen in bekannter Weise chemisch gegen Abbau stabilisiert sind, z.B. durch Veresterung oder Veretherung.

Copolymere sind Polymere aus Formaldehyd oder seinen cyclischen Oligomeren, insbesondere Trioxan, und cyclischen Äthern, cyclischen Acetalen und/oder linearen Polyacetalen.

Als Comonomere kommen α) cyclische Äther mit 3, 4 oder 5, vorzugsweise 3 Ringgliedern, β) von Trioxan verschiedene cyclische Acetale mit 5 bis 11, vorzugsweise 5, 6, 7 oder 8 Ringgliedern und γ) lineare Polyacetale, jeweils in Mengen von 0,1 bis 20, vorzugsweise 0,5 bis 10 Gew.-%, in Frage. Am besten eignen sich Copolymere aus 99,5 - 95 Gew.-% Trioxan und 0,5 bis 5 Gew.-% einer der vorgenannten Cokomponenten.

Die eingesetzten Polyacetal-Polymere haben im allgemeinen einen Schmelzindex (MFI 190/2, 16-Wert) von 2 bis 50 (DIN 53 735).

Das Pigment (b) ist ein photoaktives Weißpigment, das unter dem Einfluß von UV-Licht eine Veränderung der Farbe zeigt. Besonders geeignet hierfür ist Titandioxid, das eine Farbänderung von Weiß nach Schwarz bewirkt. Als ebenfalls photoaktiv, d.h. farbverändernd von hell nach dunkel unter dem Einfluß von UV-Licht, erweist sich Antimontrioxid, Zinkoxid oder Zinksulfid. Der Anteil des Weißpigmentes in der Kunststoff-Formmasse beträgt 0,001 bis 20 Gewichtsprozent, vorzugsweise 0,01 bis 10 Gewichtsprozent; besonders vorteilhaft ist ein Anteil von 0,1 bis 5 Gewichtsprozent, jeweils bezogen auf die Kunststoff-Formmasse.

Die erfindungsgemäße Kunststoff-Formmasse enthält gegebenenfalls noch mindestens einen weiteren Zusatzstoff (c). Dieser Zusatzstoff ist im allgemeinen ein weiteres Pigment; besonders geeignet sind Schwarz- und Buntpigmente. Der Zusatzstoff liegt in der Kunststoff-Formmasse in einer Menge bis 5 Gewichtsprozent, vorzugsweise 0,01 bis 2 Gewichtsprozent, vor.

Je nach Verwendungszweck können der Formmasse noch weitere Stoffe zugefügt werden, beispielsweise Füllstoffe wie Kreide, Glimmer, Talkum, Feldspate, Wollastonit, Aluminiumsilikat, ferner Antioxidantien, Lichtschutzmittel, Flammschutzmittel, Hitzestabilisatoren, Verstärkungsmittel, wie Glasfasern, oder Verarbeitungshilfsmittel, welche bei der Verarbeitung von Kunststoffen üblich sind.

Die Herstellung der Formmasse gemäß der Erfindung kann nach den üblichen Verfahren erfolgen. So wird z.B. die Weißpigmentkomponente b) und gegebenenfalls die Komponente c) dem Kunstoffmaterial unter Einsatz von Extrudern, Misch- oder Mahlapparaten zugemischt. Die erhaltene Mischung wird dann nach an sich bekannten Verfahren wie Pressen, Giessen, Kalandrieren, Extrudieren oder durch Spritzguß in die gewünschte endgültige Form gebracht.

Die Beschriftung mit dem EXCIMER-LASER mit Licht im ultravioletten Bereich ist mit folgenden Verfahren möglich:
(a) Mit der Maskentechnik erfolgt die Abbildung des Zeichens über eine Maske und eine Fokussierlinse auf das Formteil. Dadurch sind - in Abhängigkeit von der Pulsrate des LASERS - sehr hohe Beschriftungsraten möglich.
(b) Wird der Probenkörper auf einem computergesteuerten X-Y-Tisch unter dem Strahl des EXCIMER-LASERS geführt, so ist hiermit die Beschriftung der Probe mit beliebigen Zeichen möglich. In diesem Falle ist die Beschriftungsrate abhängig von der Geschwindigkeit, mit der der X-Y-Tisch bewegt wird.
Der EXCIMER-LASER kann vorzugsweise mit den Füllgasen KrF (Wellenlänge 248 nm), XeCl (308 nm) und XeF (351 nm) betrieben werden.

Die Verwendung der Kunststoff-Formmasse gemäß der Erfindung kann zur Beschriftung bzw. Markierung von Formkörpern aus Polyacetal beispielsweise in der Elektronik- und Kraftfahrzeugindustrie erfolgen, z.B. bei der Kennzeichnung von Tasten, Gehäusen und Einzelteilen. Diese geformten Gegenstände können dann mit Hilfe von EXCIMER-LASER-Strahlung problemlos mit Zeichen versehen werden.

### Beispiele

1. In einem Extruder (ZSK 28, Firma Werner und Pfleiderer, Stuttgart, Bundesrepublik Deutschland) wurde ein homogenes Gemisch aus 99 Gewichtsteilen eines Polyacetals (Copolymer aus 98 Gewichtsprozent Orymethyleneinheiten und 2 Gewichtsprozent Oryethyleneinheiten mit einem Schmelzindex (MFI 190/2, 16) von 9 g/10 min (DIN 53 735) und einem Kristallitschmelzbereich von 164 bis 167°C) und 1 Gewichtsteil eines Weißpigments (Titandioxid, Pigment White 6, C.I. 77 891) hergestellt.
   Aus der erhaltenen Formmasse wurden durch Spritsgießen plattenförmige Probekörper hergestellt (120 mm * 80 mm * 2 mm). Die Probekörper wurden der Strahlung eines EXCIMER-LASER's unter folgenden Bedingungen ausgesetzt:
   a) die Wellenlänge betrug 248 nm (KrF), b) die Puls-Energien lagen zwischen 0,1 Jcm⁻² und 2,0 Jcm⁻², c) die Pulslänge lag bei 30 nsec und die Pulsrate bei 30 Hz.
   Es wurde über eine Maske ein Schriftzeichen auf dem Probekörper abgebildet. Es entstand eine Schwärzung an der Auftreffstelle des LASER's, ohne daß eine Aufrauhung der Oberfläche beobachtet werden konnte. Der Vergleich im Tiefenprofil von beschrifteten und unbeschrifteten Stellen ergab im Rahmen von ± 1 µm Genauigkeit keine Unterschiede.
2. Beispiel 1 wurde wiederholt, wobei in die Formmasse zusätzlich noch 0,1 Gewichtsteile Pigment Black 7, C.I. 77 266 eingemischt wurde. Es wurde eine Schwarzfärbung des Schriftbildes ohne Oberflächenaufrauhung erhalten.
3. Analog Beispiel 1 wurde eine Mischung aus 0,1 Gewichtsteilen Pigment White 6 und 0,2 Gewichtsteilen Pigment Black 7 hergestellt und mit dem EXCIMER-LASER beschriftet. Es wurde eine Schwarzfärbung des Schriftbildes ohne Oberflächenaufrauhung erhalten.
4. Analog Beispiel 1 wurde eine Mischung aus 0,7 Gewichtsteilen Pigment White 6 und 0,2 Gewichtsteilen Pigment Brown 24 C.I. 77 310 hergestellt und mit dem EXCIMER-LASER beschriftet. Es wurde eine Schwarzfärbung des Schriftbildes ohne Oberflächenaufrauhung erhalten.
5. Beispiel 1 wurde wiederholt, wobei in die Formmasse 1 Gewichtsteil Zinksulfid (Pigment White 7, C.I. No. 77 975) anstelle von Pigment White 6 eingemischt wurde. Es wurde eine Schwarzfärbung des Schriftbildes ohne Oberflächenaufrauhung erhalten.

## Patentansprüche

1. Laserbeschriftbare Kunststoff-Formmasse, bestehend aus mindestens einem organischen Polymer und mindestens einem Pigment, dadurch gekennzeichnet, daß (a) das Polymer ein Polyacetal ist, (b) das Pigment ein anorganisches photoaktives Weißpigment ist und (c) die Formmasse gegebenenfalls mindestens einen weiteren Zusatzstoff enthält.

2. Kunststoff-Formmasse nach Anspruch 1, dadurch gekennzeichnet, daß die Menge des Pigments (b) 0,001 bis 20 Gewichtsprozent, bezogen auf die Kunststoff-Formmasse, beträgt.

3. Kunststoff-Formmasse nach Anspruch 1 oder 2, dadurch gekennzeichnet, daß das Weißpigment Titandioxid ist.

4. Kunststoff-Formmasse nach einem oder mehreren der Ansprüche 1 bis 4, dadurch gekennzeichnet, daß das Pigment (b) im Gemisch mit einem Schwarz- oder Buntpigment vorliegt.

5. Kunststoff-Formmassen nach einem oder mehreren der Ansprüche 1 bis 4, dadurch gekennzeichnet, daß das Polyacetal einen Schmelzindex (MFI 190/2, 16) von 2 bis 50 aufweist.

6. Verfahren zur Herstellung einer beschrifteten Kunststoff-Formmasse, dadurch gekennzeichnet, daß eine Kunststoff-Formmasse aus
a) einem Polyacetal,
b) einem photoaktiven Weißpigment und gegebenenfalls
c) einem weiteren Zusatzstoff
mit einem Excimer-Laser bei Wellenlängen im ultravioletten Bereich von 200 bis 550 nm bestrahlt wird.

7. Verfahren nach Anspruch 6, dadurch gekennzeichnet, daß der Excimer-Laser mit den Füllgasen KrF (Wellenlänge 248 nm), XeCl (308 nm) oder XeF (351 nm) betrieben wird, und daß die Bestrahlung mit dem Excimer-Laser mit der Maskentechnik über eine Maske und einer Fokussierlinse oder auf einem computergesteuerten X-Y-Tisch erfolgt.

8. Verwendung der Kunststoff-Formmasse gemäß Anspruch 1 als Material zur Herstellung von geformten Gegenständen, die mit Hilfe von LASER-Strahlung mit Zeichen versehen werden.

9. Verwendung nach Anspruch 8 zur Herstellung von Formkörpern aus Polyacetal für die Elektronik- und Kraftfahrzeugindustrie.

10. Verwendung nach Anspruch 8 oder 9 in Form von Tasten, Gehäusen und Einzelteilen.
